# EUROPEAN PATENT APPLICATION

(11) **EP 4 102 608 A1**
(43) Date of publication of application: **14.12.2022**
(21) Application number: 21750151.9
(22) Date of filing: 28.01.2021
(51) Int. Cl.: H01M 10/052, H01M 10/0585, H01M 50/10, H01M 50/531

(54) **BATTERY AND METHOD FOR PRODUCING BATTERY**

(30) Priority: 04.02.2020 JP 2020016866
(71) Applicant: Envision AESC Japan Ltd., Zama-shi, Kanagawa 252-0012 (JP)
(72) Inventor: OOKA, Aika, Zama-shi, Kanagawa 252-0012 (JP)
(74) Representative: Dennemeyer & Associates S.A.
(86) International application number: PCT/JP2021/002989
(87) International publication number: WO 2021/157461

(57) **Abstract**

A plurality of first current collector parts (112a) are drawn out from a stacked part (100a). An exterior material (200) encloses a battery element (100). A first tab (310) is connected to the plurality of first current collector parts (112a). The plurality of first current collector parts (112a) between the stacked part (100a) and the first tab (310) have a first region (RG1). In the first region (RG1), a thickness of a bundle including the plurality of first current collector parts (112a) in a third direction (Z) decreases from the stacked part (100a) to the first tab (310), and a decrease rate of the thickness decreases from the stacked part (100a) to the first tab (310).

## Description

### TECHNICAL FIELD

The present invention relates to a battery and a method of producing a battery.

### BACKGROUND ART

In recent years, nonaqueous electrolyte secondary batteries, particularly lithium ion secondary batteries have been developed. The lithium ion secondary battery includes a battery element including a positive electrode, a negative electrode, and a separator. The positive electrode, the negative electrode, and the separator form a stacked part of the battery element. The lithium ion secondary battery further includes an exterior material enclosing the battery element. A positive electrode current collecting foil and a negative electrode current collecting foil are drawn out from the positive electrode and the negative electrode of the stacked part of the battery element, respectively. The positive electrode current collecting foil and the negative electrode current collecting foil are connected to a positive electrode tab and a negative electrode tab, respectively.

For example, as described in Patent Document 1, a plurality of battery elements each enclosed by the exterior material may be stacked. Patent Document 1 discloses that each tab (positive electrode tab or negative electrode tab) drawn out from the exterior material is bent to bundle a plurality of tabs.

Patent Document 2 discloses that the exterior material is bent with the tab toward the battery element. Patent Document 2 discloses that the exterior material is bent with the tab, such that a length of the exterior material can be shortened in a drawing direction of the tab and a volume energy density can be improved, in comparison to a case where the exterior material is not bent.

Patent Document 3 discloses that a notch is formed in both sides of the tab of the exterior material, thereby easily bending the tab with the exterior material.

### RELATED DOCUMENT

### PATENT DOCUMENT

[Patent Document 1] International Publication No. WO2016/020999
[Patent Document 2] Japanese Unexamined Patent Publication No. H11-260327
[Patent Document 3] International Publication No. WO2019/150904

### SUMMARY OF THE INVENTION

### TECHNICAL PROBLEM

In order to shorten the length of the tab needed for a tip thereof to reach a specific position, instead of bending the tab itself, a portion of the exterior material between the stacked part and the tab is bent, and the tip of the tab may be thus directed to a specific direction. In this case, it is necessary to bend a bundle including a plurality of current collector parts (positive electrode current collecting foils or negative electrode current collecting foils) drawn out from the stacked part and positioned between the stacked part and the tab. However, when bending the bundle, the current collector part (current collecting foil) may be broken.

An example of an object of the present invention is to make it easy to bend the bundle including the plurality of current collector parts. Other objects of the present invention will become apparent from the description herein.

### SOLUTION TO PROBLEM

According to an aspect of the present invention,
there is provided a battery including: a battery element including a stacked part that includes a plurality of first electrodes, a plurality of second electrodes, and a plurality of separators, and a plurality of first current collector parts drawn out from the stacked part;
an exterior material enclosing the battery element; and
a first tab connected to the plurality of first current collector parts,
in which the plurality of first current collector parts between the stacked part and the first tab have a first region in which a thickness of a bundle including the plurality of first current collector parts decreases from the stacked part toward the first tab and a decrease rate of the thickness decreases from the stacked part toward the first tab.

According to another aspect of the present invention,
there is provided a method of producing a battery including: bundling, toward a first tab, a plurality of first current collector parts drawn out from a stacked part including a plurality of first electrodes, a plurality of second electrodes, and a plurality of separators, and joining the plurality of first current collector parts to the first tab while pressing at least a portion of the plurality of first current collector parts between the stacked part and the first tab in a thickness direction of a bundle including the plurality of first current collector parts.

### ADVANTAGEOUS EFFECTS OF INVENTION

According to the above-described aspects of the present invention, it is possible to bend the bundle including the plurality of current collector parts.

### BRIEF DESCRIPTION OF THE DRAWINGS

Fig. 1 is a top view of a battery according to an embodiment.
Fig. 2 is a right side view of the battery illustrated in Fig. 1.
Fig. 3 is a rear view of the battery illustrated in Fig. 1.
Fig. 4 is an enlarged view of a region α illustrated in Fig. 3.
Fig. 5 is an enlarged view of a first tab of the battery illustrated in Fig. 1 and its surroundings.
Fig. 6 is a cross-sectional view taken along line A-A' in Fig. 5.
Fig. 7 is a view for explaining an example of a method of producing the battery illustrated in Figs. 1 to 6.
Fig. 8 is a view for explaining an example of the method of producing the battery illustrated in Figs. 1 to 6.
Fig. 9 is a schematic view for explaining an example of application of the battery illustrated in Figs. 1 to 6.

### DESCRIPTION OF EMBODIMENTS

Hereinafter, embodiments of the present invention will be described with reference to the drawings. In all drawings, the same constituent components are denoted by the same reference signs, and detailed explanation thereof will not be repeated.

In the present specification, ordinal numbers, such as "first", "second", and "third", are attached only for distinguishing components to which the same names are attached unless specifically limited, and do not mean particular features (for example, an order or a degree of importance) of the components.

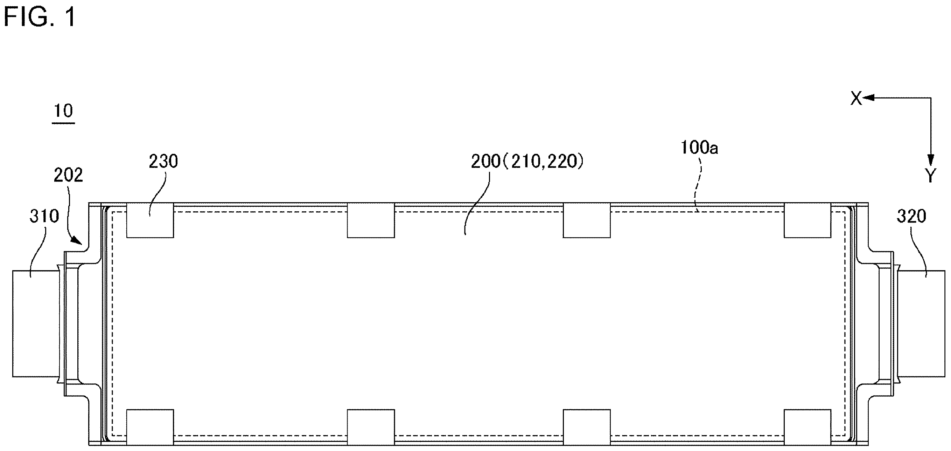

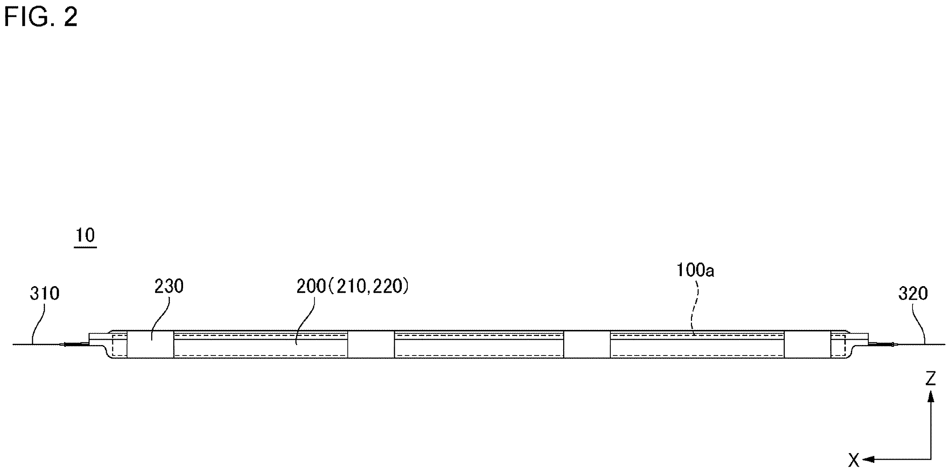

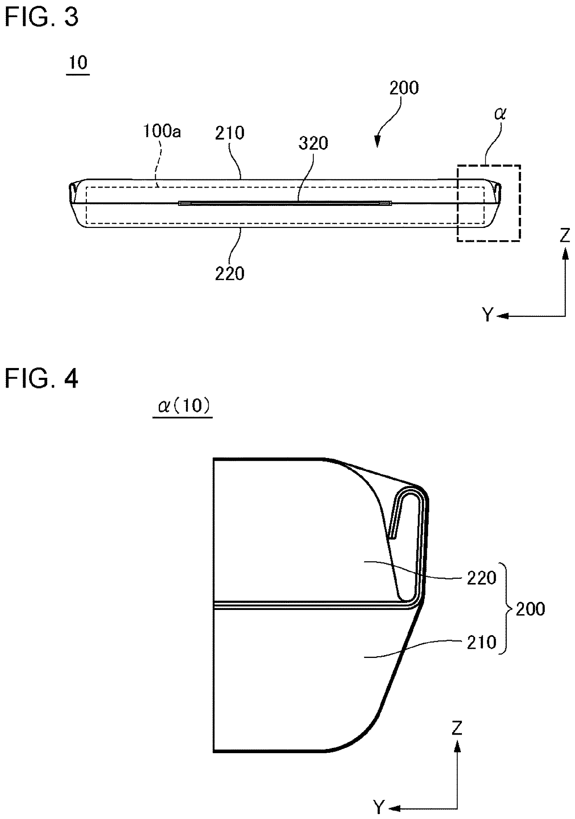

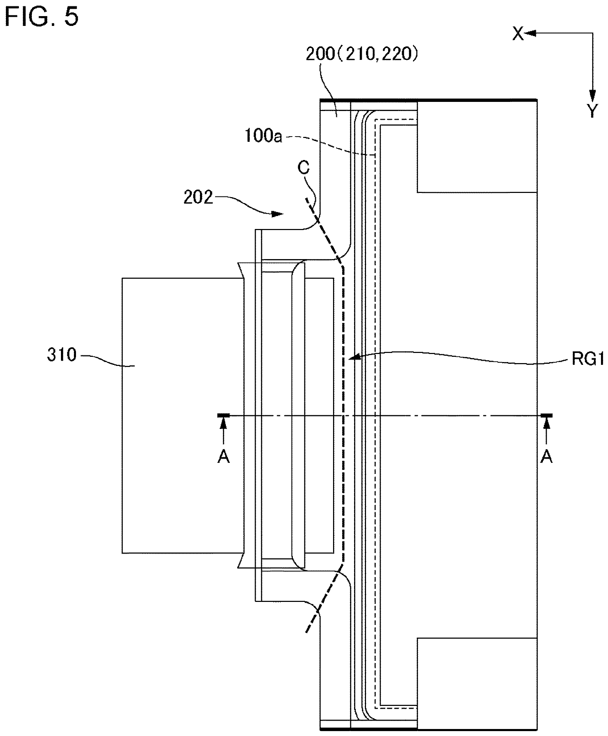

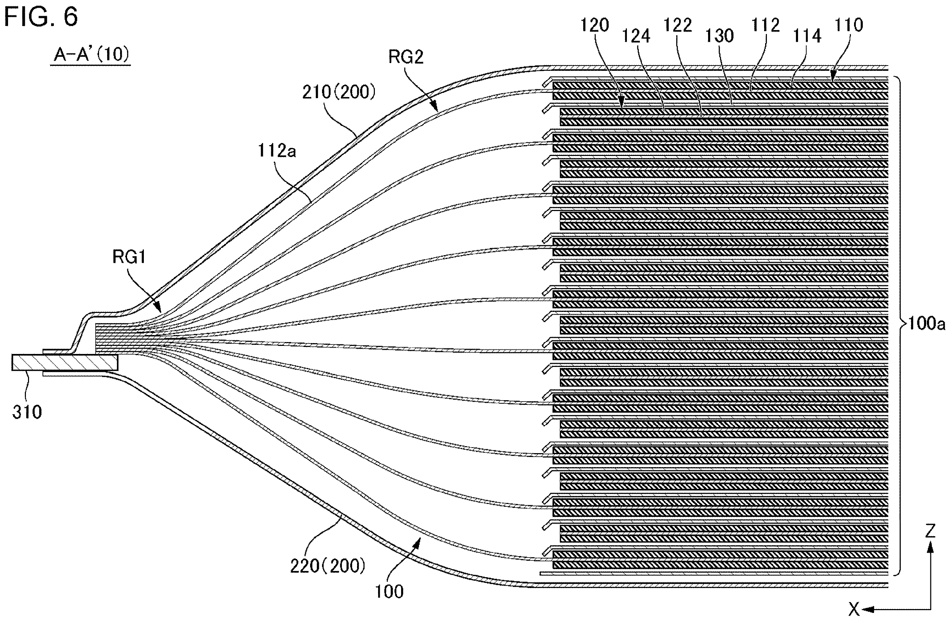

Fig. 1 is a top view of a battery 10 according to an embodiment. Fig. 2 is a right side view of the battery 10 illustrated in Fig. 1. Fig. 3 is a rear view of the battery 10 illustrated in Fig. 1. Fig. 4 is an enlarged view of a region α illustrated in Fig. 3. Fig. 5 is an enlarged view of a first tab 310 of the battery 10 illustrated in Fig. 1 and its surroundings. Fig. 6 is a cross-sectional view taken along line A-A' in Fig. 5.

The battery 10 includes a battery element 100, an exterior material 200, the first tab 310, and a second tab 320. The battery element 100 has a stacked part 100a and a plurality of first current collector parts 112a. The stacked part 100a includes a plurality of first electrodes 110, a plurality of second electrodes 120, and a plurality of separators 130.

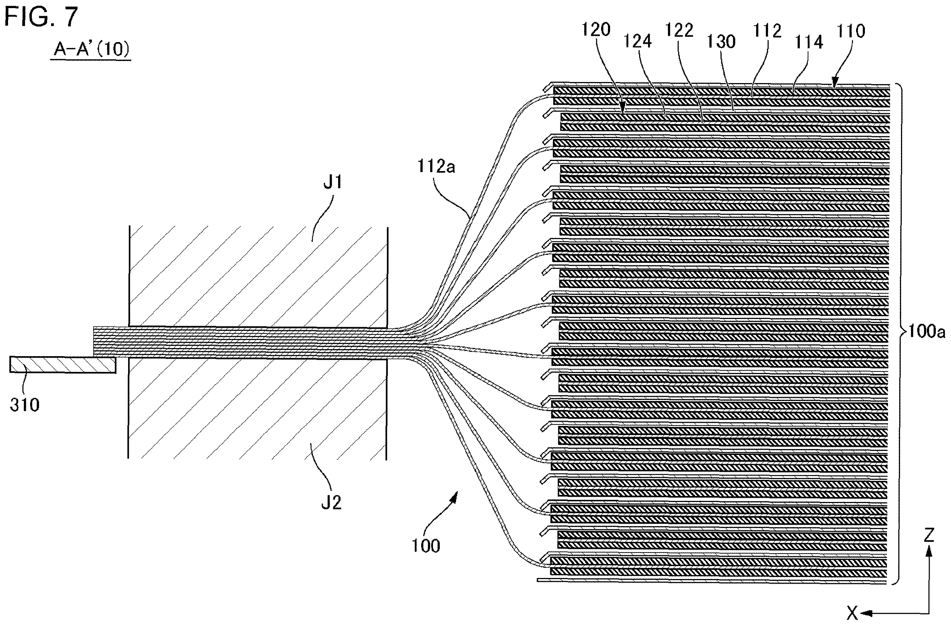

In Figs. 1 to 6, a first direction X is a length direction of the battery 10 (battery element 100). A positive direction of the first direction X (direction indicated by an arrow representing the first direction X) is a direction from the second tab 320 toward the first tab 310, and is a forward direction of the battery 10 (battery element 100). A negative direction of the first direction X (direction opposite to the direction indicated by the arrow representing the first direction X) is a direction from the first tab 310 toward the second tab 320, and is a backward direction of the battery 10 (battery element 100). A second direction Y is a direction intersecting the first direction X, specifically, a direction orthogonal to the first direction X, and is a width direction of the battery 10 (battery element 100). A positive direction of the second direction Y (direction indicated by an arrow representing the second direction Y) is a right direction of the battery 10, when the battery 10 is viewed from the positive direction of the first direction X. A negative direction of the second direction Y (direction opposite to the direction indicated by the arrow representing the second direction Y) is a left direction of the battery 10, when the battery 10 is viewed from the positive direction of the first direction X. A third direction Z is a direction intersecting both the first direction X and the second direction Y, specifically, a direction orthogonal to both the first direction X and the second direction Y, and a thickness (height) direction of the battery 10 (battery element 100). A positive direction of the third direction Z (direction indicated by an arrow representing the third direction Z) is an upward direction of the battery 10. A negative direction of the third direction Z (direction opposite to the direction indicated by the arrow representing the third direction Z) is a downward direction of the battery 10. The same applies to Figs. 7 to 9 to be described below.

In Fig. 5, a fold C indicated by the broken line represents a position of a fold formed when the exterior material 200 is bent between the stacked part 100a and the first tab 310.

In the present embodiment, the battery 10 is a lithium ion secondary battery. However, the battery 10 may be a battery different from the lithium ion secondary battery.

An overview of the battery 10 will be described with reference to Fig. 6.

The plurality of first current collector parts 112a are each drawn out from the plurality of first electrodes 110 of the stacked part 100a forward of the stacked part 100a (positive direction of the first direction X). The exterior material 200 encloses the battery element 100. The first tab 310 is connected to the plurality of first current collector parts 112a. The plurality of first current collector parts 112a between the stacked part 100a and the first tab 310 have a first region RG1 and a second region RG2. The first region RG1 is positioned, in the first direction X, closer to the first tab 310 than the stacked part 100a is. The second region RG2 is positioned on the stacked part 100a side of the first region RG1 in the first direction X. In addition, the second region RG2 is positioned, in the first direction X, closer to the stacked part 100a than the first tab 310 is.

In the first region RG1, a thickness of a bundle including the plurality of first current collector parts 112a in the third direction Z (distance in the third direction Z between two first current collector parts 112a positioned at both ends of the bundle in the third direction Z among the plurality of first current collector parts 112a) decreases nonlinearly from the stacked part 100a to the first tab 310 (toward the positive direction of the first direction X). Specifically, in the first region RG1, the thickness of the bundle including the plurality of first current collector parts 112a in the third direction Z decreases from the stacked part 100a toward the first tab 310 (toward the positive direction of the first direction X), and a decrease rate of the thickness is reduced from the stacked part 100a toward the first tab 310 (toward the positive direction of the first direction X). For example, in the first region RG1, the thickness of the bundle including the plurality of first current collector parts 112a in the third direction Z can conform to or be approximated by a downward convex function with the position in the first direction X as a variable.

In the second region RG2, a thickness of the bundle including the plurality of first current collector parts 112a in the third direction Z (distance in the third direction Z between two first current collector parts 112a positioned at both ends of the bundle in the third direction Z among the plurality of first current collector parts 112a) decreases nonlinearly from the stacked part 100a toward the first tab 310 (toward the positive direction of the first direction X). Specifically, in the second region RG2, the thickness of the bundle including the plurality of first current collector parts 112a in the third direction Z decreases from the stacked part 100a toward the first tab 310 (toward the positive direction of the first direction X), and a decrease rate of the thickness is increased from the stacked part 100a toward the first tab 310 (toward the positive direction of the first direction X). For example, in the second region RG2, the thickness of the bundle including the plurality of first current collector parts 112a in the third direction Z can conform to or be approximated by an upward convex function with the position in the first direction X as a variable.

In the present embodiment, a thickness (third direction Z) of the bundle of the plurality of first current collector parts 112a in the vicinity of the first tab 310 of the first region RG1 can be smaller than a thickness (third direction Z) of the bundle of the plurality of first current collector parts 112a in the vicinity of the first tab 310 based on an assumption that each first current collector part 112a extends straight from the stacked part 100a toward the first tab 310. In this case, even if the plurality of first current collector parts 112a are bent in the first region RG1 or in the vicinity of the first region RG1, each first current collector part 112a may be less broken in comparison to the case where each first current collector part 112a extends straight from the stacked part 100a toward the first tab 310. Therefore, the plurality of first current collector parts 112a are easily bent so that a tip of the first tab 310 (end on the positive direction side of the first direction X) is directed to a specific direction. For example, the plurality of first current collector parts 112a and the exterior material 200 are bent so that the first region RG1 of the plurality of first current collector parts 112a or a region of the plurality of first current collector parts 112a located between the stacked part 100a and the first tab 310, on the first tab 310 side of the first region RG1 becomes the fold C (Fig. 5).

The plurality of first current collector parts 112a between the stacked part 100a and the first tab 310 may further have a region positioned on the first tab 310 side of the first region RG1. In the region, a minimum value of the thickness of the bundle including the plurality of first current collector parts 112a in the third direction Z (distance in the third direction Z between two first current collector parts 112a positioned at both ends of the bundle in the third direction Z among the plurality of first current collector parts 112a) is, for example, 50% or more, 65% or more, 80% or more, or 95% or more of a maximum value of the thickness of the bundle including the plurality of first current collector parts 112a in the third direction Z.

A plurality of second current collector parts (not illustrated) each drawn out from the plurality of second electrodes 120 backward of the stacked part 100a (negative direction of the first direction X) and the second tab 320 may also have the same relationship as a relationship illustrated in Fig. 6. That is, the plurality of second current collector parts (not illustrated) may have regions corresponding to the first region RG1 and the second region RG2, like the plurality of first current collector parts 112a. Alternatively, the second current collector part (not illustrated) drawn out from the second electrode 120 and the second tab 320 may have a relationship different from the relationship illustrated in Fig. 6. For example, the plurality of second current collector parts (not illustrated) may not have the regions corresponding to the first region RG1 and the second region RG2.

The details of the battery 10 will be described with reference to Figs. 1 to 4.

The first tab 310 is positioned on a front side of the battery 10 (positive direction of the first direction X), and the second tab 320 is positioned on a rear side of the battery 10 (negative direction of the first direction X). However, the first tab 310 and the second tab 320 may be positioned on a common side of the battery 10, for example, the front side (in the positive direction of the first direction X) or rear side (in the negative direction of the first direction X) of the battery 10. In this case, the first tab 310 and the second tab 320 are arranged in the second direction Y, for example.

The exterior material 200 encloses the battery element 100 together with an electrolytic solution (not illustrated). The exterior material 200 has a first exterior material sheet 210 and a second exterior material sheet 220. The first exterior material sheet 210 covers an upper surface of the stacked part 100a (surface on the positive direction side of the third direction Z), and the second exterior material sheet 220 covers a lower surface of the stacked part 100a (surface on the negative direction side of the third direction Z). The first exterior material sheet 210 and the second exterior material sheet 220 are bonded to each other in a region surrounding the stacked part 100a, when viewed in the third direction Z. Further, the exterior material 200 is folded on both sides of the stacked part 100a in the second direction Y toward the stacked part 100a. Specifically, as illustrated in Fig. 4, a portion of the exterior material 200 on the negative direction side of the second direction Y has a portion that is bent from the negative direction of the second direction Y toward the positive direction of the third direction Z, and a portion bent from the bent portion and positioned on the positive direction side of the second direction Y with respect to the bent portion. However, a folded shape of the exterior material 200 is not limited to an example illustrated in Fig. 4. Further, the portion of the exterior material 200 on the positive direction side of the second direction Y may have a shape similar to or different from that illustrated in Fig. 4. According to the present embodiment, a volume of the battery 10 can be reduced and a volume energy density of the battery 10 can be improved in comparison to a case where the exterior material 200 is unfolded.

In the present embodiment, the exterior material 200 is folded on both sides of the stacked part 100a in the second direction Y toward the stacked part 100a. However, the exterior material 200 may be folded on only one of both sides of the stacked part 100a in the second direction Y toward the stacked part 100a. That is, the exterior material 200 may be folded on at least one of both sides of the stacked part 100a in the second direction Y toward the stacked part 100a.

In the present embodiment, the exterior material 200 has two exterior material sheets (first exterior material sheet 210 and second exterior material sheet 220). However, the exterior material 200 may have only one exterior material sheet. In this case, the exterior material sheet may be folded on one of both sides of the battery element 100 (stacked part 100a) in the second direction Y so as to cover the upper surface of the stacked part 100a (surface on the positive direction side of the third direction Z) by one portion of the exterior material sheet, and cover the lower surface of the stacked part 100a (surface on the negative direction side of the third direction Z) by the other portion of the exterior material sheet, and thus the one portion of the exterior material sheet and the other portion of the exterior material sheet may be bonded.

Notches 202 are disposed on the exterior material 200 on both sides of the first tab 310 in the second direction Y, respectively. The notches 202 are open to a direction from the stacked part 100a side toward the first tab 310 side (positive direction of the first direction X) and directions from the first tab 310 toward both sides of the first tab 310 in the second direction Y (the notch 202 on the left side (negative direction side of the second direction Y) is open to the negative direction of the second direction Y, and the notch 202 on the right side (positive direction side of the second direction Y) is open to the positive direction of the second direction Y). In this case, when the exterior material 200 is bent along the fold C between the stacked part 100a and the first tab 310, the notch 202 can be the start of the fold C of the exterior material 200. Therefore, in the present embodiment, the exterior material 200 can be easily bent between the stacked part 100a and the first tab 310 in comparison to a case where no notches 202 are provided. Further, when the notch 202 is provided, it is not necessary to bend the folded portions on both sides of the exterior material 200 in the second direction Y from the positive direction of the first direction X toward the positive direction or negative direction of the third direction Z. The folded portions on both sides of the exterior material 200 in the second direction Y are difficult to be bent from the positive direction of the first direction X toward the positive direction or negative direction of the third direction Z. However, in the present embodiment, it is not necessary to bend the folded portions on both sides of the exterior material 200 in the second direction Y, as described above. Therefore, in the present embodiment, the exterior material 200 can be easily bent between the stacked part 100a and the first tab 310 in comparison to a case where no notches 202 are provided.

In a direction from the first tab 310 side toward the stacked part 100a side (negative direction of the first direction X), an edge of the notch 202 on the stacked part 100a side is positioned on the first tab 310 side of the first region RG1 of the plurality of first current collector parts 112a. In this case, in the direction from the first tab 310 side toward the stacked part 100a side (negative direction of the first direction X), a distance between an edge of the notch 202 on the stacked part 100a side and a front surface of the stacked part 100a (surface on the positive direction side of the first direction X) can be increased, in comparison to a case where the edge of the notch 202 on the stacked part 100a side is aligned with the first region RG1 of the plurality of first current collector parts 112a or is positioned on the stacked part 100a side of the first region RG1. Therefore, it is possible to reduce deterioration of sealing performance of the exterior material 200 due to the provision of the notch 202. However, in the direction from the first tab 310 side toward the stacked part 100a side (negative direction of the first direction X), the edge of the notch 202 on the stacked part 100a side may be aligned with the first region RG1 of the plurality of first current collector parts 112a or may be positioned on the stacked part 100a side of the first region RG1.

The end, on the first tab 310 side, of the notch 202 located on the left side (negative direction side of the second direction Y) among two notches 202 is positioned, in the second direction Y, closer to the end (left surface) of the first tab 310 on the left side (negative direction side of the second direction Y) than to the end of the stacked part 100a on the left side (negative direction side of the second direction Y). In this case, a length of the fold C can be shortened in comparison to a case where the end, on the first tab 310 side, of the notch 202 located on the left side (negative direction side of the second direction Y) among two notches 202 is positioned, in the second direction Y, closer to the end (left surface) of the stacked part 100a on the left side (negative direction side of the second direction Y) than to the end of the first tab 310 on the left side (negative direction side of the second direction Y). However, the end, on the first tab 310 side, of the notch 202 located on the left side (negative direction side of the second direction Y) among two notches 202 may be positioned, in the second direction Y, closer to the end (left surface) of the stacked part 100a on the left side (negative direction side of the second direction Y) than to the end of the first tab 310 on the left side (negative direction side of the second direction Y). Alternatively, the end, on the first tab 310 side, of the notch 202 located on the left side (negative direction side of the second direction Y) among two notches 202 may be positioned, in the second direction Y, at an equal distance from the end of the first tab 310 on the left side (negative direction side of the second direction Y) and the end (left surface) of the stacked part 100a on the left side (negative direction side of the second direction Y). The fact described above similarly applies to the end, on the first tab 310 side, of the notch 202 located on the right side (positive direction side of the second direction Y) among the two notches 202.

A region where the notch 202 is provided is not limited to the present embodiment. For example, the notch 202 may be disposed on the exterior material 200 on only one of both sides of the first tab 310 in the second direction Y. That is, the notch 202 may be disposed on the exterior material 200 on at least one of both sides of the first tab 310 in the second direction Y. Even when the notch 202 is disposed on the exterior material 200 on only one of both sides of the first tab 310 in the second direction Y, the exterior material 200 can be easily bent in comparison to the case where no notches 202 are provided.

A direction to which the notch 202 is open is not limited to the present embodiment. For example, the notches 202 may not be open to the directions from the first tab 310 toward both sides of the first tab 310 in the second direction Y (the notch 202 on the left side (negative direction side of the second direction Y) may not be open to the negative direction of the second direction Y, and the notch 202 on the right side (positive direction side of the second direction Y) may not be open to the positive direction of the second direction Y), and the notches 202 may be open to only the direction from the stacked part 100a side toward the first tab 310 side (positive direction of the first direction X). Even in this case, the exterior material 200 can be easily bent between the stacked part 100a and the first tab 310 in comparison to the case where no notches 202 are provided.

The notches 202 of the exterior material 200 on both sides of the second tab 320 in the second direction Y may be the same as the notches 202 on the first tab 310 side, or may be different from the notches 202 on the first tab 310 side. Alternatively, no notch 202 may be disposed on at least one of the first tab 310 side and the second tab 320 side.

The details of the battery element 100 will be described with reference to Fig. 5.

The first electrode 110 and the second electrode 120 have different polarities from each other. The first electrode 110, the first current collector 112, the first active material layer 114, the second electrode 120, the second current collector 122, and the second active material layer 124 are a positive electrode, a positive electrode current collector, a positive electrode active material layer, a negative electrode, a negative electrode current collector, and a negative electrode active material layer, respectively. However, the first electrode 110, the first current collector 112, the first active material layer 114, the second electrode 120, the second current collector 122, and the second active material layer 124 may be a negative electrode, a negative electrode current collector, a negative electrode active material layer, a positive electrode, a positive electrode current collector, and a positive electrode active material layer, respectively.

The first electrode 110 has the first current collector 112 and the first active material layer 114. In the present embodiment, the first active material layer 114 is positioned on both the upper surface (the surface on the positive direction side of the third direction Z) and the lower surface (the surface on the negative direction side of the third direction Z) of the first current collector 112. However, the first active material layer 114 may be positioned on only one of the upper surface and the lower surface of the first current collector 112.

The second electrode 120 has the second current collector 122 and the second active material layer 124. In the present embodiment, the second active material layer 124 is positioned on both the upper surface (the surface on the positive direction side of the third direction Z) and the lower surface (the surface on the negative direction side of the third direction Z) of the second current collector 122. However, the second active material layer 124 may be positioned on only one of the upper surface and the lower surface of the second current collector 122.

The separator 130 is positioned between the first electrode 110 and the second electrode 120 adjacent to each other in the third direction Z. The separator 130 is provided to prevent contact (that is, a short circuit) between the first electrode 110 and the second electrode 120 adjacent to each other in the third direction Z.

The stacked part 100a has the plurality of first electrodes 110, the plurality of second electrodes 120, and the plurality of separator 130 stacked in the third direction Z. The plurality of first electrodes 110 and the plurality of second electrodes 120 are alternately stacked along the third direction Z so that the separator 130 is positioned between the first electrode 110 and the second electrode 120 adjacent to each other.

The first current collector part 112a is connected to the first current collector 112 of the battery element 100. Specifically, the first current collector 112 and the first current collector part 112a are an integral conductive part (conductive foil). In other words, the conductive part (conductive foil) is the first current collector 112 of the first electrode 110 in a region where it overlaps with the second electrode 120 and the separator 130 in the third direction Z, and the first current collector part 112a on an outer side of the stacked part 100a (positive direction side of the first direction X of the stacked part 100a). The same applies to the second current collector part (not illustrated) drawn out from the second electrode 120 backward of the stacked part 100a (negative direction of the first direction X).

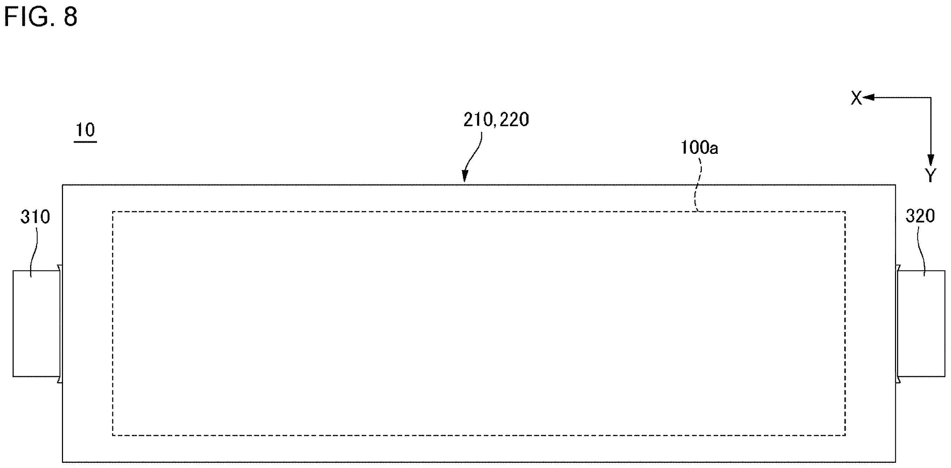

Figs. 7 and 8 are views for explaining an example of a method of producing the battery 10 illustrated in Figs. 1 to 6. Fig. 7 corresponds to Fig. 6. Fig. 8 corresponds to Fig. 1.

First, the battery element 100 is formed. The battery element 100 is formed by alternately stacking the plurality of first electrodes 110 and the plurality of second electrodes 120 so that the separator 130 is disposed between the first electrode 110 and the second electrode 120 adjacent to each other.

Next, as illustrated in Fig. 7, the plurality of first current collector parts 112a are bundled in the first tab 310 to join the plurality of first current collector parts 112a to the first tab 310, while pressing at least a portion of the plurality of first current collector parts 112a between the stacked part 100a and the first tab 310 in a thickness direction (third direction Z) of the bundle including the plurality of first current collector parts 112a with a first jig J1 and a second jig J2.

At least the portion of the plurality of first current collector parts 112a is pressed in the thickness direction (third direction Z) of the bundle including the plurality of first current collector parts 112a by placing the plurality of first current collector parts 112a on the second jig J2, and pressing the first jig J1 to the plurality of first current collector parts 112a from the top (positive direction of the third direction Z) toward the bottom (negative direction of the third direction Z). In this case, it does not necessary to perform a joining treatment such as welding so that a distortion (described below) remains on a portion of the plurality of first current collector parts 112a pressed in the thickness direction (third direction Z). However, a method of pressing the plurality of first current collector parts 112a is not limited to the method according to the present embodiment.

The plurality of first current collector parts 112a are joined to the first tab 310 by welding such as heat welding and ultrasonic welding.

In the present embodiment, each first current collector part 112a is joined to the first tab 310 in a state in which a shape that extends straight from the stacked part 100a to the first tab 310 is distorted (that is, a force that causes the distortion is applied). Even after the force is released (for example, after the first jig J1 and the second jig J2 are separated from the plurality of first current collector parts 112a), each first current collector part 112a is still distorted. As a result, the first region RG1 and the second region RG2 (Fig. 6) are formed.

The plurality of second current collector parts (not illustrated) each drawn out from the plurality of second electrodes 120 backward (negative direction of the first direction X) of the stacked part 100a can be joined to the second tab 320 in the same manner as that described in Fig. 7.

Next, as illustrated in Fig. 8, the upper surface of the stacked part 100a (surface on the positive direction side of the third direction Z) is covered by the first exterior material sheet 210, and the lower surface of the stacked part 100a (surface on the negative direction side of the third direction Z) is covered by the exterior material 200. Next, when viewed in the third direction Z, the first exterior material sheet 210 and the second exterior material sheet 220 are joined to each other by welding for example, in the region surrounding the stacked part 100a. Next, notches 202 (for example, Fig. 1) are formed at four corners of the exterior material 200, respectively. Next, as illustrated in Fig. 4, the exterior material 200 is folded on both sides of the stacked part 100a in the second direction Y toward the stacked part 100a.

In this manner, the battery 10 is produced.

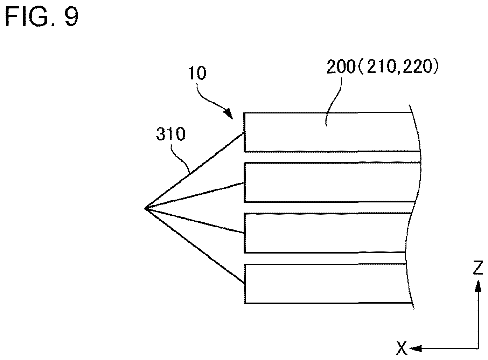

Fig. 9 is a schematic view for explaining an example of application of the battery 10 illustrated in Figs. 1 to 6. Referring to Figs. 5 and 6, the example of application of the battery 10 will be described with reference to Fig. 9.

In the example, a plurality of batteries 10 (battery elements 100) are stacked along a thickness direction (third direction Z) of each battery 10. The plurality of first current collector parts 112a and the exterior material 200 of each battery 10 (battery element 100) is bent along the fold C. The first tab 310 of each battery 10 is positioned on a front side (in the positive direction side of the first direction X) of each battery element 100 (battery element 100), and is bundled at a place positioned at the center of the plurality of batteries 10 (plurality of battery elements 100) in the third direction Z.

The plurality of first current collector parts 112a and the exterior material 200 of each battery 10 (battery element 100) are bent so that the tips of the first tab 310 (ends on the positive direction side of the first direction X) are directed in different directions from each other with respect to the direction from the stacked part 100a toward the first tab 310 (positive direction of the first direction X). In the example illustrated in Fig. 9, a tip of the first tab 310 (end on the positive direction side of the first direction X) of the battery 10 (battery element 100) in the first tier when viewed from the negative direction of the third direction Z toward the positive direction is directed in a direction inclined by a predetermined angle from the positive direction of the first direction X toward the positive direction of the third direction Z with respect to the positive direction of the first direction X. A tip of the first tab 310 (end on the positive direction side of the first direction X) of the battery 10 (battery element 100) in the second tier when viewed from the negative direction of the third direction Z toward the positive direction is directed in a direction inclined by an angle smaller than the predetermined angle of the first tab 310 of the battery 10 (battery element 100) in the first tier when viewed from the positive direction of the first direction X toward the positive direction of the third direction Z, with respect to the positive direction of the first direction X. A tip of the first tab 310 (end on the positive direction side of the first direction X) of the battery 10 (battery element 100) in the third tier when viewed from the negative direction of the third direction Z toward the positive direction is directed in a direction inclined by a predetermined angle from the positive direction of the first direction X toward the negative direction of the third direction Z with respect to the positive direction of the first direction X. A tip of the first tab 310 (end on the positive direction side of the first direction X) of the battery 10 (battery element 100) in the fourth tier when viewed from the negative direction of the third direction Z toward the positive direction is directed in a direction inclined by an angle larger than the predetermined angle of the first tab 310 of the battery 10 (battery element 100) in the third tier when viewed from the positive direction of the first direction X toward the negative direction of the third direction Z with respect to the positive direction of the first direction X.

Although the embodiments of the present invention have been described with reference to drawings, these are mere examples of the present invention, and various other configurations other than those given above may be adopted.

Priority is claimed on Japanese Patent Application No. 2020-016866, filed on February 4, 2020, the content of which is incorporated herein by reference.

### REFERENCE SIGNS LIST

- 10: battery
- 100: battery element
- 100a: stacked part
- 110: first electrode
- 112: first current collector
- 112a: first current collector part
- 114: first active material layer
- 120: second electrode
- 122: second current collector
- 124: second active material layer
- 130: separator
- 200: exterior material
- 202: notch
- 210: first exterior material sheet
- 220: second exterior material sheet
- 310: first tab
- 320: second tab
- C: fold
- J1: first jig
- J2: second jig
- RG1: first region
- RG2: second region
- X: first direction
- Y: second direction
- Z: third direction

## Claims

1. A battery comprising:
a battery element comprising a stacked part that comprises a plurality of first electrodes, a plurality of second electrodes, and a plurality of separators, and a plurality of first current collector parts drawn out from the stacked part;
an exterior material enclosing the battery element; and
a first tab connected to the plurality of first current collector parts,
wherein the plurality of first current collector parts between the stacked part and the first tab have a first region in which a thickness of a bundle including the plurality of first current collector parts decreases from the stacked part toward the first tab and a decrease rate of the thickness decreases from the stacked part toward the first tab.

2. The battery according to claim 1,
wherein the plurality of first current collector parts between the stacked part and the first tab have a second region positioned on the stacked part side of the first region, in which the thickness of the bundle including the plurality of first current collector parts decreases from the stacked part toward the first tab, and the decrease rate of the thickness increases from the stacked part toward the first tab.

3. The battery according to claim 1 or 2,
wherein the exterior material is provided with a notch on at least one of both sides of the first tab, the notch being open to a direction from the stacked part side toward the first tab side.

4. The battery according to claim 3,
wherein an edge of the notch on the stacked part side is positioned, in a direction from the first tab side toward the stacked part side, on the first tab side of the first region of the plurality of first current collector parts.

5. The battery according to claim 3 or 4,
wherein the notch is open to a direction from the first tab toward each side of the first tab.

6. The battery according to any one of claims 3 to 5,
wherein the exterior material is folded on at least one of both sides of the stacked part toward the stacked part.

7. The battery according to any one of claims 1 to 6,
wherein the plurality of first current collector parts and the exterior material are bent so that the first region of the plurality of first current collector parts or a region of the plurality of first current collector parts located between the stacked part and the first tab, on the first tab side of the first region becomes a fold.

8. The battery according to claim 7,
wherein a plurality of the battery elements that are stacked on each other are provided, and
the plurality of first current collector parts and the exterior material of each battery element are bent so that tips of the first tabs of the battery elements are directed in different directions from each other with respect to a direction from the stacked part toward the first tab.

9. A method of producing a battery comprising:
bundling, toward a first tab, a plurality of first current collector parts drawn out from a stacked part comprising a plurality of first electrodes, a plurality of second electrodes, and a plurality of separators, and joining the plurality of first current collector parts to the first tab while pressing at least a portion of the plurality of first current collector parts between the stacked part and the first tab in a thickness direction of a bundle including the plurality of first current collector parts.
